(19) Europäisches Patentamt
European Patent Office
Office européen des brevets

(11) Veröffentlichungsnummer: **0 490 155 B1**

(12) # EUROPÄISCHE PATENTSCHRIFT

(45) Veröffentlichungstag der Patentschrift: **20.09.95**

(51) Int. Cl.[6]: **C08L 77/00**, C08G 69/04, //(C08L77/00,67:02)

(21) Anmeldenummer: **91120090.5**

(22) Anmeldetag: **26.11.91**

(54) **Thermoplastische Formmassen auf der Basis von Polyamiden und thermoplastischen Polyester-Elastomeren.**

(30) Priorität: **08.12.90 DE 4039420**

(43) Veröffentlichungstag der Anmeldung: **17.06.92 Patentblatt 92/25**

(45) Bekanntmachung des Hinweises auf die Patenterteilung: **20.09.95 Patentblatt 95/38**

(84) Benannte Vertragsstaaten: **BE CH DE FR GB LI NL**

(56) Entgegenhaltungen:
**EP-A- 0 331 001**
**US-A- 4 229 340**

**PATENT ABSTRACTS OF JAPAN vol. 11, no. 282 (C-446)(2729) 11. September 1987 ; & JP-A-62 081 419**

(73) Patentinhaber: **BASF Aktiengesellschaft**
**Carl-Bosch-Strasse 38**
**D-67063 Ludwigshafen (DE)**

(72) Erfinder: **Goetz, Walter, Dr.**
**Dhauner Strasse 79**
**W-6700 Ludwigshafen (DE)**
Erfinder: **Betz, Walter, Dr.**
**Weimarer Strasse 45**
**W-6700 Ludwigshafen (DE)**
Erfinder: **Pipper, Gunter**
**Schlangenthaler Weg 10**
**W-6702 Bad Duerkheim (DE)**

**EP 0 490 155 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft thermoplastische Formmassen, erhältlich durch Einmischen von

A) 0,5 bis 5 Gew.% eines thermoplastischen Polyester-Elastomeren

und

B) 0 bis 50 Gew.% faser- oder teilchenförmige Füllstoffe oder deren Mischungen

in eine Schmelze von

C) 40 bis 99,5 Gew.% eines Polyamid-Präpolymeren mit einer Viskositätszahl von 40 bis 80 ml/g gemessen an einer 0,5 gew.%igen Lösung in 96 %iger Schwefelsäure bei 23°C

und anschließender Nachkondensation in fester Phase.

Außerdem betrifft die Erfindung Verfahren zur Herstellung dieser thermoplastischen Formmassen, deren Verwendung zur Herstellung von Fasern, Folien und Formkörpern sowie die hierbei erhältlichen Formkörper.

Polyamide wie Poly-ε-Caprolactam und Polyhexamethylenadipinsäureamidzählen zu den seit langem bekannten technischen Kunststoffen und haben auf vielen Gebieten Anwendung gefunden. Sie zeichnen sich im allgemeinen durch eine große Härte, Steifigkeit und eine gute Wärmeformbeständigkeit aus, sind darüber hinaus widerstandsfähig gegen Abrieb und Verschleiß und auch beständig gegen viele Chemikalien sowie schwerentflammbar.

Bei der Verarbeitung von Polyamiden, insbesondere beim Spritzguß, werden i.a. zur Verbesserung des Einzugs- und Entformungsverhaltens Schmiermittel zugesetzt.

So beschreibt die DE-A 37 06 356 ein Polyamid-Granulat mit einer äußeren Schmiermittelbeschichtung aus Zn-, Al- und Ca-Stearat sowie $C_2$- bis $C_{24}$-Estern aliphatischer Carbonsäuren mit 6 bis 24 C-Atomen.

Aus der DE-A 23 49 835 ist der Zusatz von Ca- oder Zn-Stearat zu Polyamid-Formmassen bekannt.

Der Zusatz dieser Schmiermittel führt jedoch zu einem Molekulargewichtsabbau, verbunden mit einem Zähigkeitsverlust bei der Verarbeitung von Polyamiden, besonders bei höherer Temperatur. Dieser Effekt tritt insbesondere bei hochschmelzenden Polyamiden wie Copolyamiden aus ε-Caprolactam, Hexamethylendiamin und Terephthalsäure sowie aus Tetramethylendiamin und Adipinsäure auf. Aber auch bei Polyamiden aus Hexamethylendiamin und Adipinsäure zeigen sich, speziell beim Zusatz von Al-Stearat, diese Nachteile. Weiterhin führt der Zusatz dieser Schmiermittel dazu, daß die Polyamide nicht mehr schwer entflammbar sind.

Die Verwendung von Stearinsäure, Stearylstearat, Pentaerytrithester, Diglycolester von langkettigen Fettsäuren, Palmitinsäure, Behensäure und Derivaten hiervon als Schmiermittel ist ebenfalls bekannt. Diese Verbindungen weisen ebenfalls die oben genannten Nachteile auf.

Arbeitet man diese Schmiermittel in eine Schmelze von Polyamid-Präpolymeren mit einer Viskositätszahl von 40 bis 80 ml/g ein und unterwirft diese Mischung - zum Erreichen der für technische Anwendungen notwendigen Viskositätszahlen von mindestens 140 ml/g - einer thermischen Nachbehandlung (Temperung), so werden sie bei den vorherrschenden Verarbeitungstemperaturen extrahiert und somit wirkungslos.

Als Schmiermittel, die nicht auf Derivaten langkettiger Fettsäuren basieren sind beispielsweise Polytetrafluorethylen, Molybdänsulfid und Graphit zu nennen. Nachteilig wirken sich hier insbesondere die dunkle Eigenfarbe sowie wirtschaftliche und gesundheitliche Gesichtspunkte aus.

Die JP-OS 106 854/85 beschreibt Polyamide mit einer Mischung aus Acrylatkautschuken und Polyetherester als schlagzäh modifizierende Komponente. Diese Produkte sind jedoch sehr weich und leicht entflammbar.

Aus der DE-A-39 26 895 ist der Zusatz einer Mischung aus Polyetherestern und Aluminiumsalzen zu Polyamiden bekannt. Auch hier zeigen sich die schon erwähnten Nachteile des Molekulargewichtsabbaus der Polyamide durch die Verwendung von Aluminiumsalzen und die Extraktion der Schmiermittel beim Einarbeiten derselben in ein Polyamid-Präpolymeres mit einer Viskositätszahl von 40 bis 80 ml/g bei den vorherrschenden Verarbeitungstemperaturen.

In der EP-A 331 001 wird zur Verbesserung der Fließfähigkeit von Polyamiden der Zusatz von Polyetherestern beschrieben. Diese Herstellverfahren führen jedoch zu Produkten, die nicht schwerentflammbar sind.

Aufgabe der vorliegenden Erfindung war es daher, thermoplastische Formmassen auf der Basis von Polyamid zur Verfügung zu stellen, die die vorstehend geschilderten Nachteile nicht aufweisen und die sich vor allem durch gute Fließfähigkeit und Schwerentflammbarkeit auszeichnen.

Diese Aufgabe wird erfindungsgemäß durch die eingangs definierten thermoplastischen Formmassen gelöst. Bevorzugte Massen dieser Art sind den Unteransprüchen zu entnehmen.

Weiterhin wurden Verfahren zur Herstellung dieser thermoplastischen Formmassen, deren Verwendung zur Herstellung von Fasern, Folien und Formkörpern sowie die hierbei erhältlichen Formkörper gefunden.

Als Komponente A) enthalten die erfindungsgemäßen thermoplastischen Formmassen 0,5 bis 5 Gew.%, bevorzugt 1,5 bis 2,5 Gew.%, eines thermoplastischen Polyester-Elastomeren.

Unter Polyester-Elastomeren werden dabei segmentierte Copolyetherester verstanden, die langkettige Segmente, die sich in der Regel von Poly(alkylen)etherglykolen und kurzkettige Segmente, die sich von niedermolekularen Diolen und Dicarbonsäuren ableiten, enthalten.

Derartige Produkte sind an sich bekannt und in der Literatur beschrieben. Nur beispielsweise sei hier auf die US-Patente 3 651 014, 3 784 520, 4 185 003 und 4 136 090, sowie auf einige Veröffentlichungen von G.K. Hoeschele (Chimia 28, (9), 544 (1974); Angew. Makromolek. Chemie 58/59, 299 - 319 (1977) und Pol. Eng. Sci. 1974, 848) verwiesen. Auch im Handel sind entsprechende Produkte unter den Bezeichnungen Hytrel® (DuPont), Arnitel® (Akzo) sowie Pelprene® (Toyobo Co. Ltd.) erhältlich.

Ganz allgemein setzen sich thermoplastische Copolyetherester-Elastomere aus langkettigen Segmenten der allgemeinen Formel

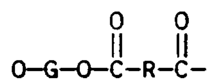

und kurzkettigen Segmenten der allgemeinen Formel

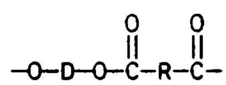

zusammen,
wobei

- G einen zweiwertigen Rest, der nach der Entfernung der terminalen Hydroxylgruppen aus einem Poly(alkylenoxid)glykol mit einem Molekulargewicht von vorzugsweise 400 bis 6000, insbesondere 600 bis 4000 entsteht,
- D einen zweiwertigen Rest, der nach Entfernung der terminalen Hydroxylgruppen aus einem niedermolekularen Diol mit einem Molekulargewicht von vorzugsweise weniger als 250 entsteht, und
- R einen zweiwertigen Rest, der nach Entfernung der Carboxylgruppen aus einer Dicarbonsäure mit einem Molekulargewicht von vorzugsweise weniger als 300 entsteht,

darstellen.

Unter dem Molekulargewicht soll hier das Zahlenmittel verstanden werden.

Es versteht sich, daß auch Mischungen von mehreren Poly(alkylenoxid)glykolen, mehreren Diolen oder mehreren Dicarbonsäuren eingesetzt werden können.

Die Poly(alkylenoxid)glykole HO-G-OH haben vorzugsweise einen Schmelzpunkt von weniger als 55 °C und ein Kohlenstoff/Sauerstoff-Molverhältnis von vorzugsweise 2 bis 10, insbesondere 2 bis 6.

Beispiele für Poly(alkylenoxid)glykole sind Poly(ethylenoxid)glykol, Poly(1,2-propylenoxid)glykol, Poly-(1,3-propylenoxid)glykol, Poly(1,2-butylenoxid)glykol, Poly(1,3-butylenoxid)glykol, Poly(1,4-butylenoxid)-glykol, Poly(pentamethylenoxid)glykol, Poly(hexamethylenoxid)glykol, Poly(heptamethylenoxid)glykol, Poly-(octamethylenoxid)glykol, Poly(nonamethylenoxid)glykol sowie statistische oder Blockcopolymere aus verschiedenen der vorstehend genannten Glykole. Bevorzugt werden Poly(ethylenoxid)glykol, Poly(1,2-propylenoxid)glykol, Poly(1,3-propylenoxid)glykol und Poly(1,4-butylenoxid)glykol sowie deren Mischungen. Der Gewichtsanteil der langkettigen Segmente, die sich von den vorstehenden Polyalkylenoxidglykolen und Dicarbonsäuren ableiten, liegt im allgemeinen im Bereich von 5 bis 70 Gew.%, vorzugsweise von 7 bis 50 Gew.%, bezogen auf das Gesamtgewicht der Komponente A).

Als Diole HO-D-OH kommen ganz allgemein niedermolekulare Diole mit Molekulargewichten von vorzugsweise weniger als 250 in Betracht. Diese können lineare oder verzweigte, cycloaliphatische oder aromatische Grundstrukturen aufweisen.

Diole mit 2 bis 15 C-Atomen werden bevorzugt. Beispielhaft seien hier nur 1,2-Ethandiol, 1,3-Propandiol, 1,2-Propandiol, 1,4-Butandiol, 1,3-Butandiol, 1,2-Butandiol, 1,5-Pentandiol, 2,2-Dimethyl-1,3-propandiol, 1,6-Hexandiol sowie dessen Isomere, Decamethylendiol, die isomeren Dihydroxycyclohexane, Resorcin, Hydrochinon und die verschiedenen Dihydroxynaphthaline genannt. Von diesen werden besonders aliphatische Diole mit 2 bis 8, insbesondere 2 bis 4 C-Atomen bevorzugt (1,2-Ethandiol, 1,3-Propandiol, 1,4-Butandiol).

Auch ungesättigte Diole haben sich in einigen Fällen als geeignet herausgestellt, z.B. But-2-en-1,4-diol, insbesondere in Mischung mit den vorstehend genannten gesättigten Diolen. Beispiele für Polyetherester aus derartigen Mischungen sind der EP-A 49 823 zu entnehmen.

Schließlich sind als Diole auch noch Diphenole wie 4,4-Dihydroxydiphenyl, Di-(4-hydroxyphenyl)methan und 2,2-Di-(4-hydroxyphenyl)propan (häufig als Bisphenol A bezeichnet) zu nennen.

Selbstverständlich können anstelle der Diole auch deren esterbildende Derivate eingesetzt werden; in diesen Fällen kann das Molekulargewicht natürlich je nach Art des Derivats auch mehr als 250 betragen, da der bevorzugte Molekulargewichtsbereich (MG $< 250$) sich auf die Diole selbst bezieht.

Die Dicarbonsäuren HOOC-R-COOH haben vorzugsweise Molekulargewichte von weniger als 300 und können aromatisch, aliphatisch oder cycloaliphatisch sein. Die Dicarbonsäuren können auch Substituenten aufweisen, die im Verlauf der Polymerisationsreaktion nicht stören.

Als Beispiele für aromatische Dicarbonsäuren seien Terephthalsäure, Isophthalsäure, substituierte Dicarbonsäuren der allgemeinen Formel

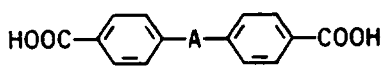

wobei A eine chem. Bindung, eine Alkylengruppe mit 1 bis 3 C-Atomen, -CO-, -S- oder $-SO_2-$ ist, 1,5-, 2,6- und 2,7-Naphthalindicarbonsäure und deren $C_1$- bis $C_6$-alkylsubstituierten Derivate genannt. Von diesen werden Terephthalsäure, Isophthalsäure, deren Mischungen oder Mischungen aus Terephthalsäure oder Isophthalsäure mit anderen Dicarbonsäuren bevorzugt.

Aliphatische Dicarbonsäuren, die eingesetzt werden können sind beipsielsweise Oxalsäure, Fumarsäure, Maleinsäure, Citraconsäure, Sebacinsäure, Adipinsäure, Glutarsäure, Succinsäure, Azelainsäure, um nur einige zu nennen.

Es versteht sich, daß auch Mischungen verschiedener aliphatischer Dicarbonsäuren eingesetzt werden können. Wie im Fall der Diole können anstelle der Säuren selbst auch deren esterbildende Derivate eingesetzt werden. Dies hat sich in einigen Fällen auch als besonders vorteilhaft herausgestellt.

Wegen weiterer langkettiger Glykole HO-G-OH, kurzkettiger Diole HO-D-OH und Dicarbonsäuren HOOC-R-COOH sei auf die US-A 3 651 014 verwiesen.

Wie bereits vorstehend erwähnt, beträgt der Anteil der langkettigen Segmente im allgemeinen 5 bis 70 Gew.%, vorzugsweise 7 bis 50 Gew.% und der Anteil der kurzkettigen Segmente entsprechend 30 bis 95 Gew.%, vorzugsweise 50 bis 93 Gew.%. Der Gewichtsanteil der jeweiligen Segmente beeinflußt unter anderem die Härte der Produkte.

Die Dicarbonsäuren in der langkettigen und kurzkettigen Segmenten können dabei gleich oder verschieden sein; ebenso können auch bei der Herstellung der langkettigen bzw. kurzkettigen Segmente Mischungen von Diolen oder Dicarbonsäuren eingesetzt werden.

Die vorstehenden Ausführungen zeigen, daß eine Vielzahl verschiedener segmentierter Co(polyetherester) als Komponente A) eingesetzt werden kann. Von diesen werden Copolyetherester, deren langkettige Einheiten sich von Poly(1,4-alkylenoxid)glykol mit einem Molekulargewicht von 600 bis 2000, Terephthalsäure und 1,4-Butandiol ableiten, bevorzugt.

In einigen Fällen hat es sich als vorteilhaft erwiesen, einen Teil der Terephthalsäure durch Isophthalsäure, Adipinsäure oder Sebacinsäure oder einen Teil des 1,4-Butandiols durch andere Diole, z.B. 1,3-Propandiol, 1,5-Pentandiol oder But-2-en-1,4-diol zu ersetzen. Derartige Produkte werden in der US-A 3 651 014 und der EP-A 49 823 beschrieben.

Verfahren zur Herstellung segmentierter Co(polyetherester) sind an sich bekannt und in der Literatur beschrieben, so daß sich hier nähere Angaben erübrigen. Hier sei nur auf US-A 3 651 014, US-A 3 784 520 und einen übersichtsartikel von G.K. Hoeschele (Chimia 28, 544 (1974) verwiesen).

Die Co(polyetherester) A) können zur Stabilisierung gegen thermischen oder oxidativen Abbau Stabilisatoren enthalten, wie dies beispielsweise in den US-A 4 136 090 und 4 185 003 sowie einem Artikel von G.K. Hoeschele (Angew. Makromolekulare Chemie 58/59, 299 - 319 (1977)) zu entnehmen ist.

Als Komponente B) können die erfindungsgemäßen thermoplastischen Formmassen übliche Zusatzstoffe und Verarbeitungshilfsmittel wie Stabilisatoren, Oxidationsverzögerer, Mittel gegen Wärmezersetzung und Zersetzung durch ultraviolettes Licht, Entformungsmittel, Färbemittel wie Farbstoffe und Pigmente, faser- und pulverförmige Füll- und Verstärkungsmittel, Keimbildungsmittel, Weichmacher usw. enthalten, deren Anteil in der Regel nicht mehr als 50 Gew.% beträgt.

Als Beispiele für Oxidationsverzögerer und Wärmestabilisatoren sind Halogenide von Metallen der Gruppe I des periodischen Systems, z.B. Natrium-, Kalium- und/oder Lithiumhalogenide, ggf. in Verbindung mit Kupfer-(I)-Halogeniden, z.B. Chloriden, Bromiden, Jodiden, sterisch gehinderte Phenole, Hydrochinone, aromatische sekundäre Amine wie Diphenylamine, verschiedene substituierte Vertreter dieser Gruppen und deren Mischungen in Konzentrationen bis zu 1 Gew.%, bezogen auf das Gewicht der thermoplastischen Formmasse genannt.

Als UV-Stabilisatoren, die im allgemeinen in Mengen bis zu 2 Gew.%, bezogen auf die Formmasse, verwendet werden, seien verschiedene substituierte Resorcine, Salicylate, Benzotriazole und Benzophenone genannt.

Weiterhin können organische Farbstoffe wie Nigrosin, Pigmente wie Titandioxid, Cadmiumsulfid, Cadmiumselenid, Phthalocyanine, Ultramarinblau und Ruß als Farbstoffe zugesetzt werden, sowie faser- und pulverförmige Füllstoffe und Verstärkungsmittel. Beispiele für letztere sind Kohlenstoffasern, Glasfasern, amorphe Kieselsäure, Asbest, Calciumsilicat (Wollastonit), Aluminiumsilicat, Magnesiumcarbonat, Kaolin, Kreide, gepulverter Quarz, Glimmer und Feldspat. Der Anteil derartiger Füll- und Farbstoffe beträgt im allgemeinen bis zu 50 Gew.%, bevorzugt 20 bis 35 Gew.%.

Als Keimbildungsmittel können z.B. Talkum, Calciumfluorid, Natriumphenylphosphinat, Aluminiumoxid und feinteiliges Polytetrafluorethylen eingesetzt werden.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid und o- und p-Tolylethylsulfonamid genannt.

Als weitere Zusatzstoffe können alle für Polyamide bekannten Flammschutzmittel zugegeben werden, insbesondere solche auf Basis von Phosphorverbindungen bzw. roter Phosphor selbst.

Als Komponente C) enthalten die erfindungsgemäßen thermoplastischen Formmassen 40 bis 99,5 Gew.%, bevorzugt 92 bis 99 Gew.%, insbesondere 97,5 bis 98,5 Gew.-% eines Polyamid-Präpolymeren mit einer Viskositätszahl von 40 bis 80 ml/g, bevorzugt 45 bis 60 ml/g, gemessen an einer 0,5 gew.%igen Lösung in konzentrierter Schwefelsäure bei 23 °C.

Als Polyamide, die zur Herstellung der Komponente C) verwendet werden können, sind thermoplastische teilkristalline Polyamide zu nennen.

Es eignen sich besonders auch teilaromatische teilkristalline Copolyamide, die im wesentlichen aufgebaut sind aus

$C_1$) 20-90 Gew.% Einheiten, die sich von Terephthalsäure und Hexamethylendiamin ableiten,

$C_2$) 0-50 Gew.% Einheiten, die sich von $\epsilon$-Caprolactam ableiten und

$C_3$) 0-80 Gew.% Einheiten, die sich von Adipinsäure und Hexamethylendiamin ableiten.

Die Komponente $C_1$) enthält 20-90 Gew.% Einheiten, die sich von Terephthalsäure und Hexamethylendiamin ableiten. Ein geringer Anteil der Terephthalsäure, vorzugsweise nicht mehr als 10 Gew.% der gesamten eingesetzten aromatischen Dicarbonsäuren können durch Isophthalsäure oder andere aromatische Dicarbonsäuren, vorzugsweise solche, in denen die Carboxylgruppen in para-Stellung stehen, ersetzt werden.

Neben den Einheiten, die sich von Terephthalsäure und Hexamethylendiamin ableiten, enthalten die Copolyamide Einheiten, die sich von $\epsilon$-Caprolactam ableiten und/oder Einheiten, die sich von Adipinsäure und Hexamethylendiamin ableiten.

Der Anteil an Einheiten die sich von $\epsilon$-Caprolactam ableiten, beträgt maximal 50 Gew.%, vorzugsweise 20 bis 50 Gew.%, insbesondere 25 bis 40 Gew.%, während der Anteil an Einheiten die sich von Adipinsäure und Hexamethylendiamin ableiten, bis zu 80 Gew.%, vorzugsweise 30 bis 75 Gew.% und insbesondere 35 bis 65 Gew.% beträgt.

Die Copolyamide können auch sowohl Einheiten von $\epsilon$-Caprolactam als auch Einheiten von Adipinsäure und Hexamethylendiamin enthalten; in diesem Fall ist es von Vorteil, wenn der Anteil an Einheiten, die frei von aromatischen Gruppen sind, mindestens 10 Gew.% beträgt, vorzugsweise mindestens 20 Gew.%. Das Verhältnis der Einheiten, die sich von $\epsilon$-Caprolactam und von Adipinsäure und Hexamethylendiamin ableiten, unterliegt dabei keiner besonderen Beschränkung.

Bevorzugt werden Copolyamide, deren Zusammensetzung im Dreistoffdiagramm innerhalb des durch Eckpunkte $X_1$ bis $X_5$ festgelegten Fünfecks liegt, wobei die Punkte $X_1$ bis $X_5$ folgendermaßen definiert sind:

$X_1$ 40 Gew.-% Einheiten $C_1$)
60 Gew.-% Einheiten $C_3$)

$X_2$ 60 Gew.-% Einheiten $C_1$)
40 Gew.-% Einheiten $C_3$)

$X_3$ 80 Gew.-% Einheiten $C_1$)
5 Gew.-% Einheiten $C_2$)

15 Gew.-% Einheiten $A_3$)
$X_4$ 80 Gew.-% Einheiten $C_1$)
20 Gew.-% Einheiten $C_2$)
$X_5$ 50 Gew.-% Einheiten $C_1$)
50 Gew.-% Einheiten $C_2$)

In der Abbildung ist das durch diese Punkte festgelegte Fünfeck in einem Dreistoffdiagramm dargestellt.

Als besonders vorteilhaft für viele Anwendungszwecke haben sich Polyamide mit 50 bis 80, insbesondere 60 bis 75 Gew.% Einheiten, die sich von Terephthalsäure und Hexamethylendiamin ableiten (Einheiten $C_1$)) und 20 bis 50, vorzugsweise 25 bis 40 Gew.% Einheiten, die sich von $\epsilon$-Caprolactam ableiten (Einheiten $C_2$)) enthalten, erwiesen.

Neben den vorstehend beschriebenen Einheiten $C_1$) bis $C_3$) können die teilaromatischen Copolyamide noch untergeordnete Mengen, vorzugsweise nicht mehr als 15 Gew.%, insbesondere nicht mehr als 10 Gew.% an weiteren Polyamidbausteinen enthalten, wie sie von anderen Polyamiden bekannt sind. Diese Bausteine können sich von Dicarbonsäuren mit 4 bis 16 Kohlenstoffatomen und aliphatischen oder cycloalphatischen Diamine mit 4 bis 16 Kohlenstoffatomen sowie von Aminocarbonsäuren bzw. entsprechenden Lactamen mit 7 bis 12 Kohlenstoffatomen ableiten. Als geeignete Monomere dieser Typen seien hier nur Suberinsäure, Azelainsäure, Sebacinsäure oder Isophthalsäure als Vertreter der Dicarbonsäuren, 1,4-Butandiamin, 1,5-Pentandiamin, Piperazin, 4,4'-Diaminodicyclohexylmethan, 2,2-(4,4'-Diaminodicyclohexyl)propan oder 3,3'-Dimethyl-4,4'-Diaminodicyclohexylmethan als Vertreter der Diamine und Capryllactam, Önanthlactam, Omega-Aminoundecansäureund Laurinlactam als Vertreter von Lactamen bzw. Aminocarbonsäuren genannt.

Weiterhin haben sich solche teilaromatische Copolyamide als besonders vorteilhaft erwiesen, deren Triamingehalt weniger als 0,5, vorzugsweise weniger als 0,3 Gew.% beträgt.

Nach den meisten bekannten Verfahren (vgl. US-A 4 603 166) hergestellte teilaromatische Copolyamide weisen Triamingehalte auf, die über 0,5 Gew.% liegen, was zu einer Verschlechterung der Produktqualität und zu Problemen bei der kontinuierlichen Herstellung führt. Als Triamin, welches diese Probleme verursacht, ist insbesondere das Dihexamethylentriamin zu nennen, welches sich aus dem bei der Herstellung eingesetzten Hexamethylendiamin bildet.

Copolyamide mit niedrigem Triamingehalt weisen bei gleicher Lösungsviskosität niedrigere Schmelzviskositäten im Vergleich zu Produkten gleicher Zusammensetzung auf, die einen höheren Triamingehalt aufweisen. Dies verbessert sowohl die Verarbeitbarkeit wie die Produkteigenschaften erheblich.

Die Schmelzpunkte der teilaromatischen Copolyamide liegen im Bereich von 260 °C bis über 300 °C, wobei dieser hohe Schmelzpunkt auch mit einer hohen Glasübergangstemperatur von in der Regel mehr als 75, insbesondere mehr als 85 °C (im trockenen Zustand) verbunden ist.

Binäre Copolyamide auf der Basis von Terephthalsäure, Hexamethylendiamin und $\epsilon$-Caprolactam weisen bei Gehalten von etwa 70 Gew.% an Einheiten, die sich von Terephthalsäure und Hexamethylendiamin ableiten, Schmelzpunkte im Bereich von 300 °C und (im trockenen Zustand) eine Glasübergangstemperatur von mehr als 110 °C auf.

Binäre Copolyamide auf der Basis von Terephthalsäure, Adipinsäure und Hexamethylendiamin erreichen bereits bei niedrigeren Gehalten von etwa 55 Gew.% Einheiten aus Terephthalsäure und Hexamethylendiamin (HMD) Schmelzpunkte von 300 °C und mehr, wobei die Glastemperatur nicht ganz so hoch liegt wie bei binären Copolyamiden, die anstelle von Adipinsäure bzw. Adipinsäure/HMD $\epsilon$-Caprolactam enthalten.

Weitere geeignete Polyamide können z.B. durch Kondensation äquimolarer Mengen einer gesättigten Dicarbonsäure mit 4 bis 12 Kohlenstoffatomen mit einem Diamin, welches 4 bis 14 Kohlenstoffatome aufweist oder durch Kondensation von $\omega$-Aminocarbonsäuren oder Polyaddition von Lactamen hergestellt werden.

Beispiele für Polyamide sind Polyhexamethylenadipinsäureamid, Polyhexamethylenazelainsäureamid, Polyhexamethylensebacinsäureamid, Polyhexamethylendodecandisäureamid, Polytetramethylenadipinsäureamid und die durch Ringöffnung von Lactamen erhaltenen Polyamide wie Polycaprolactam und Polylaurinsäurelactam.

In der Regel sind diese teilkristallinen Polyamide linear.

Besonders bevorzugt sind Polytetramethylenadipinsäureamid und Polyhexamethylenadipinsäureamid sowie Copolyamide aus Terephthalsäure, Hexamethylendiamin und $\epsilon$-Caprolactam, mit einem Gehalt an $\epsilon$-Caprolactam von weniger als 50 Gew.%; insbesondere Polyhexamethylenadipinsäureamid. Es können jedoch auch Mischungen verschiedener Polyamide verwendet werden.

Die Herstellung der Polyamid-Präpolymeren mit einer Viskositätszahl von 40 bis 80 ml/g (Komponente C)) kann nach den in den EP-A 129 195 und 129 196 beschriebenen Verfahren erfolgen.

Gemäß diesen Verfahren wird eine wäßrige Lösung der Monomeren unter erhöhtem Druck und unter gleichzeitiger Verdampfung von Wasser und Bildung eines Präpolymeren auf eine Temperatur von 250 bis 300 °C erhitzt, anschließend werden Präpolymere und Dampf kontinuierlich getrennt, der Dampf rektifiziert und die mitgeführten Diamine zurückgeleitet. Schließlich wird das Präpolymer in eine Polykondensationszone geleitet und unter einem Überdruck von 1 bis 10 bar und einer Temperatur von 250 bis 300 °C polykondensiert. Wesentlich ist bei dem Verfahren, daß die wäßrige Salzlösung unter einem Überdruck von 1 bis 10 bar innerhalb einer Verweilzeit von weniger als 60 Sekunden erhitzt wird, wobei bei Austritt aus der Verdampferzone der Umsetzungsgrad vorteilhaft mindestens 93 % und der Wassergehalt des Präpolymeren höchstens 7 Gew.% beträgt.

Durch diese kurzen Verweilzeiten wird die Bildung von Triaminen weitgehend verhindert.

Die verwendeten wäßrigen Lösungen haben in der Regel einen Monomergehalt von 30 bis 70 Gew.%, insbesondere von 40 bis 65 Gew.%.

Die wäßrige Salzlösung wird vorteilhaft mit einer Temperatur von 50 bis 100 °C kontinuierlich in eine Verdampferzone geleitet, wo die wäßrige Salzlösung unter einem Überdruck von 1 bis 10, vorzugsweise von 2 bis 6 bar auf eine Temperatur von 250 bis 330 °C erhitzt wird. Es versteht sich, daß die angewandte Temperatur über dem Schmelzpunkt des jeweils herzustellenden Polyamids liegt.

Wie bereits erwähnt, ist es wesentlich, daß die Verweilzeit in der Verdampferzone maximal 60 Sekunden, vorzugsweise 10 bis 55 Sekunden und insbesondere 10 bis 40 Sekunden beträgt.

Der Umsatz beim Austritt aus der Verdampferzone beträgt mindestens 93, vorzugsweise 95 bis 98 % und der Wassergehalt liegt vorzugsweise im Bereich von 2 bis 5, insbesondere 1 bis 3 Gew.%.

Die Verdampferzone ist vorteilhaft als Röhrenbündel ausgebildet. Besonders bewährt haben sich Röhrenbündel, in denen der Querschnitt der einzelnen Röhren periodisch wiederkehrend rohrförmig und spaltförmig ausgebildet ist.

Ferner hat es sich als vorteilhaft erwiesen, das Gemisch aus Präpolymeren und Dampf vor der Trennung der Phasen unmittelbar nach der Verdampferzone durch eine röhrenförmige Stoffaustauschzone, die mit Einbauten versehen ist, zu leiten. Hierbei hält man die in der Verdampferzone angewandten Temperaturen und Druckbedingungen ein. Die Einbauten, z.B. Füllkörper wie Raschigringe, Metallringe oder insbesondere Füllkörper aus Drahtnetz, bewirken eine große Oberfläche. Hierdurch werden die Phasen, d.h. Präpolymeres und Dampf, innig in Berührung gebracht. Dies bewirkt, daß die Menge des mit Wasserdampf freigesetzten Diamins erheblich vermindert wird. In der Regel hält man in der Stoffaustauschzone eine Verweilzeit von 1 bis 15 Minuten ein. Die Stoffaustauschzone ist vorteilhaft als Röhrenbündel ausgebildet.

Das aus der Verdampferzone bzw. Stoffaustauschzone austretende zweiphasige Gemisch aus Dampf und Präpolymeren wird getrennt. Die Trennung erfolgt in der Regel von selbst aufgrund der physikalischen Unterschiede in einem Gefäß, wobei der untere Teil des Gefäßes vorteilhaft als Polymerisationszone ausgebildet ist. Die freiwerdenden Brüden bestehen im wesentlichen aus Wasserdampf und Diaminen, die bei dem Verdampfen des Wassers freigesetzt wurden. Diese Brüden werden in eine Kolonne geleitet und rektifiziert. Geeignete Kolonnen sind beispielsweise Füllkörperkolonnen, Glockenbodenkolonnen oder Siebbodenkolonnen mit 5 bis 15 theoretischen Böden. Die Kolonne wird zweckmäßig unter den identischen Druckbedingungen wie die Verdampferzone betrieben. Die in den Brüden enthaltenen Diamine werden hierbei abgetrennt und wieder der Verdampferzone zugeführt. Es ist auch möglich, die Diamine der nachfolgenden Polymerisationszone zuzuführen. Der anfallende rektifizierte Wasserdampf wird am Kopf der Kolonne entnommen.

Das erhaltene Präpolymere, das entsprechend seinem Umsetzungsgrad im wesentlichen aus niedermolekularem Polyamid und gegebenenfalls restlichen Mengen an nicht umgesetzten Salzen besteht, wird in eine Polymerisationszone geleitet. In der Polymerisationszone wird die anfallende Schmelze bei einer Temperatur von 250 bis 330 °C, insbesondere 270 bis 310 °C, und unter einem Überdruck von 1 bis 10 bar, insbesondere 2 bis 6 bar, polykondensiert. Vorteilhaft werden die hierbei freiwerdenden Dämpfe zusammen mit den obengenannten Brüden in der Kolonne rektifiziert, vorzugsweise hält man in der Polykondensationszone eine Verweilzeit von 5 bis 30 Minuten ein. Das so erhaltene Polyamid-Präpolymere, das in der Regel eine Viskositätszahl von 40 bis 80 ml/g, bevorzugt von 45 bis 60 ml/g, gemessen an einer 0,5 gew.-%igen Lösung in 96 %iger Schwefelsäure bei 23 °C, aufweist, wird kontinuierlich aus der Kondensationszone entnommen.

Nach einer bevorzugten Arbeitsweise leitet man das so erhaltene Polyamid-Präpolymere schmelzflüssig durch eine Austragszone unter gleichzeitiger Entfernung des in der Schmelze enthaltenen Restwassers. Geeignete Austragszonen sind beispielsweise Entgasungsextruder. Die so vom Wasser befreite Schmelze wird dann in Stränge gegossen und granuliert. Das erhaltene Granulat (Komponente C)) wird bei etwa 20 °C über dem Schmelzpunkt der Komponente C) (im Falle von Polyhexamethylenadipamid bei etwa 280 °C), bevorzugt in einem Doppelschneckenextruder aufgeschmolzen und mit dem thermoplastischen Polyester-Elastomeren (Komponente A)) und gegebenenfalls der Komponente B) gemischt, als Strang ausgetragen, gekühlt und granuliert.

In einer besonders bevorzugten Ausführungsform ist es auch möglich, die Komponente A) und gegebenenfalls B) schon in den Entgasungsextruder zu geben, wobei in diesem Fall der Entgasungsextruder üblicherweise mit geeigneten Mischelementen, wie Kneter, ausgestattet ist. Anschließend wird ebenfalls als Strang extrudiert, gekühlt und granuliert.

Dieses Granulat wird in fester Phase unter Inertgas kontinuierlich oder diskontinuierlich bei einer Temperatur unterhalb des Schmelzpunktes, z.B. von 170 bis 240 °C, bis zur gewünschten Viskosität kondensiert. Für die diskontinuierliche Festphasenkondensation können z.B. Taumeltrockner, für die kontinuierliche Festphasenkondensation mit heißem Inertgas durchströmte Temperrohre verwendet werden. Bevorzugt wird die kontinuierliche Festphasenkondensation, wobei als Inertgas Stickstoff oder überhitzter Wasserdampf, vorteilhaft der am Kopf der Kolonne anfallende Wasserdampf verwendet wird.

Die Viskositätszahl, gemessen an einer 0,5 gew.-%igen Lösung in 96 %iger Schwefelsäure bei 23 °C, liegt nach der Nachkondensation in fester Phase im allgemeinen im Bereich von 120 bis 500 ml/g, vorzugsweise von 130 bis 200 ml/g.

Die erfindungsgemäßen thermoplastischen Formmassen zeichnen sich durch ein insgesamt ausgewogenes Eigenschaftsspektrum, insbesondere durch gute Fließfähigkeit und Schwerentflammbarkeit aus. Sie eignen sich zur Herstellung von Fasern, Folien und Formkörpern.

Beispiele

Komponente A

Ein Blockpolyetherester, aufgebaut im wesentlichen aus Einheiten, die sich von Poly(1,4-butylenglykol), Terephthalsäure und 1,4-Butandiol ableiten, mit einer Shore-Härte von 92 A bzw. 40 D (nach ASTM D-2240) und einem Schmelzindex von 4 bis 6,5 g/10 min (190 °C, 2,16 kg Belastung) (Hytrel® 4056 von DuPont de Nemours and Company).

Komponente C

Ein Polyamid-Präpolymeres, hergestellt nach dem in der EP-A-129 195 beschriebenen Verfahren, wobei 669,6 kg eines äquimolaren Adipinsäure/Hexamethylendiamin-Salzesbei 80 °C in 330,4 kg Wasser gelöst und kontinuierlich in einem Rohrbündelreaktor mit einem Durchsatz entsprechend einer Polyamidmenge von 50 kg/h bei einer Temperatur von 283 °C und einem Druck von 2,8 bar polykondensiert wurden. Das Produkt hatte eine Viskositätszahl von 58 ml/g, gemessen an einer 0,5 gew.%igen Lösung in konzentrierter Schwefelsäure bei 23 °C.

Beispiele 1 bis 3

Das Polyamid-Präpolymere (Komponente C) wurde als Schmelze mittels einer Austragsschnecke aus dem Abscheidegefäß der Polykondensationsanlage in einen Doppelschneckenextruder (ZSK 53 von Werner & Pfleiderer) eingebracht und mit der Komponente A bei 280 °C und 100 U/min gemischt. Anschließend wurde durch Anlegen von Vakuum entgast, wobei praktisch keine Nachkondensation eintrat. Das Produkt wurde als Strang ausgetragen, gekühlt, granuliert und mit überhitztem Wasserdampf bei einer Temperatur von 182 °C und einer Verweilzeit von 11 Stunden nachkondensiert. Die Viskositätszahl lag bei 140 ml/g, gemessen an einer 0,5 gew.%igen Lösung in konzentrierter Schwefelsäure bei 23 °C.

Vergleichsbeispiele V1 bis V3

Es wurde wie in den Beispielen 1 bis 3 gearbeitet, jedoch wurden statt der Komponente A andere Zusätze eingearbeitet.

Vergleichsbeispiel V1

Es wurde Al-Tristearat (Alugel® von Bärlocher, München) eingearbeitet.

Vergleichsbeispiel V2

Es wurde ein Ethylen/n-Butylacrylat/Acrylsäure-Copolymer mit einem Gew.-Verhältnis von Ethylen:n-Butylacrylat:Acrylsäure von 82:3:5 und einem Melt Flow Index MFI von 10,5 g/10 min (bei 190 °C und 2,16 kg Belastung) eingearbeitet.

Vergleichsbeispiel V3

Es wurde ein Ethylen/Propylenkautschuk (Gew.-Verhältnis Ethylen:Propylen von 45:55), gepfropft mit 1 Gew.% Maleinsäureanhydrid mit einem Melt Flow Index MFI von 150 g/10 min (bei 23 °C und 21,6 kg Belastung) (Exxelor® 1803 der Exxon Chemical) eingearbeitet.

Vergleichsbeispiel V4

Es wurde wie in den Beispielen 1 bis 3 gearbeitet, jedoch ohne die Komponente A.

Vergleichsbeispiele V5 bis V7

Komponente C*

Ein Polyamid, das aus Einheiten, die sich von Hexamethylendiamin und Adipinsäure ableiten, besteht und eine Viskositätszahl von 145 ml/g (gemessen an einer 0,5 gew.%igen Lösung in konzentrierter Schwefelsäure bei 23 °C) aufweist (Ultramid® A3 der BASF AG).

Das Polyamid (Komponente C*) wurde als Granulat mit der Komponente A (V5) und Al-Tristearat (Alugel® von Bärlocher, München) (V7) oder Al-Tristearat (V6) in einem Doppelschneckenextruder (ZSK 53 von Werner & Pfleiderer) bei einer Temperatur von 280 °C gemischt, als Strang ausgetragen, gekühlt und granuliert.

Von den Produkten wurde der Elastizitätsmodul (E-Modul) nach DIN 54 457, die Zugfestigkeit nach DIN 54 455 und der Melt Flow Index MFI nach DIN 53 735 (bei 285 °C und 5 kg Belastung) bestimmt. Die Durchstoßarbeit Wges wurde nach DIN 53 443 an bei 280 °C gespritzten, 2 mm dicken Rundscheiben mit einem Durchmesser von 60 mm bei einer Prüftemperatur von 23 °C bestimmt. An einem Testwerkzeug (Staubsaugerdeckel) wurde die schnellstmögliche Zykluszeit bei 280 °C ermittelt. Der Brandtest erfolgte nach UL94 (ANSI) an Flachstäben mit den Dicken 0,8 mm/1,6 mm/3,2 mm.

Die Zusammensetzungen und die Eigenschaften sind in der Tabelle zusammengestellt.

Tabelle

| Beispiel | A) | C) | C*) | Zusätze | E-Modul [kJ/m²] | Zugfestigkeit [kJ/m²] | Wges [J/m] | Brandtest | Zykluszeit [sec] | MFI [g/10 min] |
|---|---|---|---|---|---|---|---|---|---|---|
| | Zusammensetzung [Gew.%] | | | | | | | | | |
| 1 | 1 | 99,0 | - | - | 3031 | 85 | 104 | V2/V2/V- | 31 | 138 |
| 2 | 2 | 98,0 | - | - | 2946 | 83 | 111 | V2/V2/V2 | 24 | 140 |
| 3 | 4 | 96,0 | - | - | 2888 | 81 | 120 | V2/V2/V2 | 24 | 155 |
| V1 | - | 99,3 | - | 0,7 Al-Tristearat | 3010 | 86 | 30 | V-/V-/V- | 44 | 105 |
| V2 | - | 98,0 | - | 2,0 Ethylen/n-Butylacrylat/ Acrylsäure-Copolymer | 2900 | 82 | 140 | V-/V-/V- | 46 | 98 |
| V3 | - | 98,0 | - | 2,0 Pfropfkautschuk | 2895 | 81 | 140 | V-/V-/V- | 44 | 101 |
| V4 | - | 100,0 | - | - | 3025 | 85 | 102 | V2/V2/V2 | 40 | 109 |
| V5 | 2 | - | 98,0 | - | 2910 | 84 | 90 | V-/V-/V- | 26 | 133 |
| V6 | - | - | 99,3 | 0,7 Al-Tristearat | 3025 | 86 | 38 | V2/V2/V2 | 28 | 160 |
| V7 | 2 | - | 97,3 | 0,7 Al-Tristearat | 2955 | 82 | 45 | V2/V2/V2 | 26 | 142 |

## Patentansprüche

**1.** Thermoplastische Formmassen, erhältlich durch Einmischen von

A) 0,5 bis 5 Gew.% eines thermoplastischen Polyester-Elastomeren

und

B) 0 bis 50 Gew.% faser- oder teilchenförmige Füllstoffe oder deren Mischungen

in eine Schmelze von

C) 40 bis 99,5 Gew.% eines Polyamid-Präpolymeren mit einer Viskositätszahl von 40 bis 80 ml/g gemessen an einer 0,5 gew.%igen Lösung in 96 %iger Schwefelsäure bei 23 °C

und anschließender Nachkondensation in fester Phase.

**2.** Thermoplastische Formmassen nach Anspruch 1, erhältlich aus Einheiten

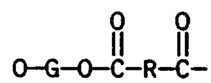

und

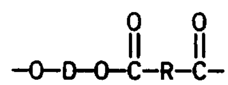

,

wobei

- G einen zweiwertigen Rest, der nach der Entfernung der terminalen Hydroxylgruppen aus einem Poly(alkylenoxid)glykol verbleibt,
- D einen zweiwertigen Rest, der nach Entfernung der terminalen Hydroxylgruppen aus einem zweiwertigen Diol verbleibt, und
- R einen zweiwertigen Rest, der nach Entfernung der Carboxylgruppen aus einer Dicarbonsäure verbleibt,

darstellen, als Komponente A).

**3.** Verfahren zur Herstellung von thermoplastischen Formmassen gemäß den Verfahrensbedingungen von Anspruch 1.

**4.** Verwendung der thermoplastischen Formmassen gemäß den Ansprüchen 1 bis 2 zur Herstellung von Fasern, Folien und Formkörpern.

**5.** Formkörper, erhältlich aus thermoplastischen Formmassen gemäß den Ansprüchen 1 bis 2 als wesentliche Komponenten.

## Claims

**1.** A thermoplastic molding composition obtainable by mixing

A) from 0.5 to 5% by weight of a thermoplastic polyester elastomer and

B) from 0 to 50% by weight of fibrous or particulate fillers or mixtures thereof

into a melt of

C) from 40 to 99.5% by weight of a polyamide prepolymer having a viscosity number of from 40 to 80 ml/g measured on a 0.5% strength by weight solution in 96% strength sulfuric acid at 23 °C

and subsequent postcondensation in solid phase.

**2.** A thermoplastic molding composition as claimed in claim 1, obtainable from units

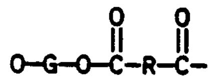

and

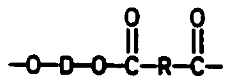

,

where

G is a divalent radical which remains on removing the terminal hydroxyl groups of a poly-(alkylene oxide) glycol,

D is a divalent radical which remains on removing the terminal hydroxyl groups of a diol, and

R is a divalent radical which remains on removing the carboxyl groups of a dicarboxylic acid,

as component A).

**3.** A process for preparing a thermoplastic molding composition by the measures of claim 1.

**4.** The use of a thermoplastic molding composition as claimed in claim 1 or 2 for producing fibers, films and moldings.

**5.** A molding obtainable from a thermoplastic molding composition as claimed in claim 1 or 2 as essential component.

**Revendications**

**1.** Masses à mouler thermoplastiques, obtenues par incorporation de

A) 0,5 à 5% en poids d'un élastomère de polyester thermoplastique et de

B) 0 à 50% en poids de charges fibreuses ou particulaires ou de mélanges de celles-ci

dans une masse fondue de

C) 40 à 99,5% en poids d'un prépolymère de polyamide ayant un indice de viscosité de 40 à 80 ml/g, mesuré à 23 °C sur une solution à 0,5% en poids dans de l'acide sulfurique à 96%,

suivie d'une post-condensation en phase solide.

**2.** Masses à mouler thermoplastiques selon la revendication 1, obtenues à partir de motifs

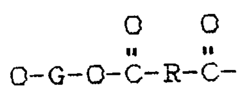

et

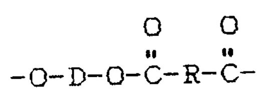

où

G représente un reste bivalent, qui reste après l'élimination des groupements hydroxy terminaux d'un poly(oxyde d'alkylène)glycol,

D représente un reste bivalent, qui reste après l'élimination des groupements hydroxy terminaux d'un diol bivalent et

R représente un reste bivalent, qui reste après l'élimination des groupements carboxyle d'un acide dicarboxylique,

en tant que composant A).

3. Procédé de préparation de masses à mouler thermoplastiques selon les conditions opératoires de la revendication 1.

4. Utilisation des masses à mouler thermoplastiques selon la revendication 1 ou 2 pour la fabrication de fibres, de feuilles et de corps moulés.

5. Corps moulés, obtenus à partir de masses à mouler thermoplastiques selon la revendication 1 ou 2 en tant que composants essentiels.

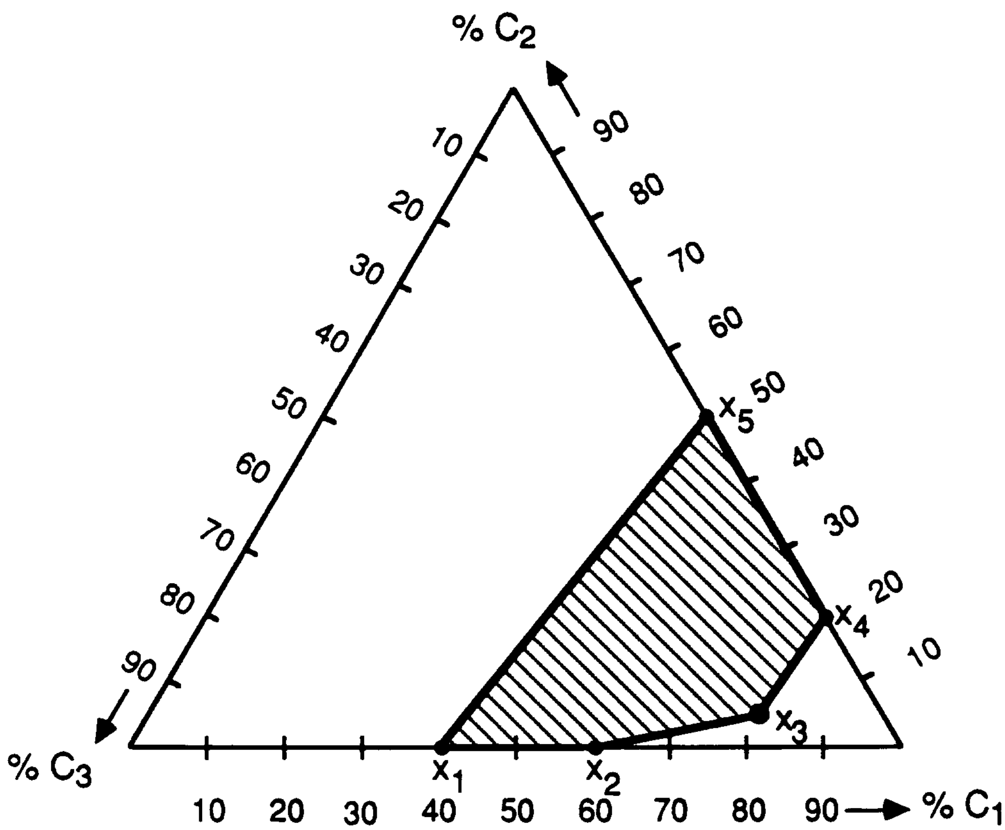
% C2
% C3
% C1
10
20
30
40
50
60
70
80
90
x1
x2
x3
x4
x5